# EUROPÄISCHE PATENTSCHRIFT

(11) **EP 0 466 702 B1**
(45) Veröffentlichungstag und Bekanntmachung des Hinweises auf die Patenterteilung: **18.05.1994**
(21) Anmeldenummer: 90903342.5
(22) Anmeldetag: 24.02.1990
(51) Int. Cl.: E21B 17/046, F16D 1/10, B25D 17/18, E21B 25/00, E21B 10/26

(54) **ANSCHLUSSKUPPLUNG FÜR BOHRMASCHINE MIT STAUBABSAUGUNG**
COUPLING FOR DRILLING MACHINE WITH DUST EXTRACTOR
RACCORD POUR PERCEUSE A ASPIRATEUR

(30) Priorität: 05.04.1989 DE 3910946; 06.04.1989 DE 3911159; 03.06.1989 DE 8906827 U
(43) Veröffentlichungstag der Anmeldung: 22.01.1992
(73) Patentinhaber: Geissler & Kuper Gesellschaft mit beschränkter Haftung Diamantwerkzeuge, Maschinen, D-29227 Celle (DE)
(72) Erfinder: GEISSLER, Bernd, D-3101 Eicklingen (DE)
(74) Vertreter: Einsel, Robert, Dipl.-Ing.
(86) Internationale Anmeldenummer: EP9000316
(87) Internationale Veröffentlichungsnummer: WO9012193

(56) Entgegenhaltungen:
- DE-A- 2 417 228
- DE-A- 3 612 801
- DE-C- 667 082
- DE-C- 883 876
- GB-A- 2 086 278
- US-A- 4 101 238
- US-A- 4 189 013

## Beschreibung

Die Erfindung betrifft eine Bohreinrichtung mit Kraftübertragung von einem hohlzylindrischen Antriebsteil auf ein Schaftrohr mit Bohrkrone.

Eine solche Bohreinrichtung ist aus DE-A-2 417 228 bekannt.

Durch die EP 0 235 581 A1 der Anmelderin ist weiter bekannt, die Kupplung und die Wirksamkeit damit betriebener Bohreinrichtungen dadurch zu vereinfachen und zu verbessern, daß ein erstes Kupplungsteil und ein zweites Kupplungsteil hohlzylindrische Kupplungsbereiche aufweisen, die zum Kuppeln ineinandersteckbar sind, daß einander zugewandte Stirnflächen der beiden Kupplungsteile mit senkrecht zur Achse des Gestänges angeordneten Klemmflächen gegeneinanderpreßbar sind und daß das erste Kupplungsteil mit Vorsprüngen und das zweite Kupplungsteil mit Vertiefungen, Nuten oder Aussparungen versehen sind, die beim Kuppeln ineinandergreifen, und daß zur Erzielung der Preßwirkung auf dem ersten Kupplungsteil ein Klemmring vorgesehen ist, der mittels einer auf dem ersten Kupplungsteil angeordneten Schraubverbindung drehbar und dadurch in Achsrichtung verschiebbar gelagert ist, wobei eine Stirnseite des Klemmrings eine der Klemmflächen bildet. Diese bekannte Anordnung hat sich in der Praxis bewährt.

Es ist auch bekannt, Bohreinrichtungen mit Absaugvorrichtungen für das Bohrklein oder mit Spüleinrichtungen zu kombinieren. Es hat sich jedoch gezeigt, daß mit solchen bekannten Bohreinrichtungen der Bohrbetrieb häufig unterbrochen werden muß, weil die Absaugwege sich zusetzten. Der Erfindung liegt die Aufgabe zugrunde, die Wirksamkeit der Bohreinrichtung hinsichtlich des Durchtritts von Kühlflüssigkeiten beim Naßschnittverfahren und hinsichtlich der Absaugung des Bohrkleins oder Bohrstaubs beim Trockenschnitt zu verbessern.

Diese Aufgabe wird durch die im kennzeichnenden Teil des Anspruchs 1 ausgegebenen Merkmale gelöst.

Weiterbildungen der Erfindung sind in den Unteransprüchen gekennzeichnet.

Bei einer bevorzugten Ausführungsform der Erfindung ist die Wandung des Antriebsteiles über den für die Verbindung mit dem Schaftrohr vorgesehenen Bereich hinaus verlängert und mit diesem verlängerten Bereich an zwei mit Abstand hintereinander vorgesehenen Lagern in dem Gehäuse drehbar gelagert. Zwischen den Lagerstellen ist die Wandung mit Öffnungen für den Durchtritt des Absaugluftstromes versehen und das Gehäuse weist in diesem Bereich eine Anschlußöffnung für den Saugschlauch auf. Die drehbare Wandung des Antriebsteiles ist auf beiden Seiten des Gehäuses mit Wellensicherungsringen (Seeger-Ringe) versehen, um eine Längsverschiebung oder eine Berührung von Gehäuse und anderen auf dem Antriebsteil gelagerten drehbaren Teilen wie dem Klemmring oder dergl. zu vermeiden. Bei einer Berührung von Klemmring und Gehäuse wäre sonst Gefahr des "Fressens" beider Teile gegeben. Dann wären beide Teile nur noch schwer trennbar.

Ein Mittel zur Vermeidung des Verstopfens des Strömungsweges sind beispielsweise ein Umlenkteil mit kegelförmiger Spitze, das in den Innenraum des Antriebsteiles so eingesetzt ist, daß die Kegelspitze etwa in der Ebene der Mittelpunkte der Löcher in der Wandung des Antriebsteiles liegt und in Richtung auf das Schaftrohr weist. Ein weiteres Mittel ist eine solche Ausbildung des Übergangs vom Schaftrohr zum Antriebsteil, daß der erbohrte Bohrkern den Übergang nicht sperren kann. Das geschieht beispiels weise durch einen im Innenraum des Schaftrohres in Richtung auf die Bohrkrone angeordneten Vorsprung. Weiterhin kann die Wandung des Schaftrohres mit einer Vielzahl von Löchern versehen sein, die eine Strömung ermöglichen und zugleich durch Wirbelbildung im Innenraum alles Bohrklein weiterleiten. Solche Löcher im Bereich des Übergangs vom Schaftrohr zum. Antriebsteil ermöglichen die Fortführung eines Saugbetriebs auch bei verstopftem Schaftrohr und verhindern so, daß Bohrstaub den Kupplungsbereich verstopfen kann. In das Antriebsteil ist von der Bohrkrone aus ein Zentrierbohrer einsetzbar, dessen Länge so gewählt ist, daß er mit seiner Spitze über die Bohrkrone hinausragt und mit seinem Sockel in das Antriebsteil eingreift. Der meist relativ lange innerhalb des Schaftrohres befindliche Teil ist als Hohlzylinder mit vielen Löchern ausgebildet, der an seiner vorderen Stirnseite den eigentlichen Zentrierbohrer trägt und an seinem Sockel in das Antriebsteil steckbar ausgebildet ist. Vorzugsweise ist im Innenraum des Antriebsteiles längs einer Durchmesserlinie ein Bolzen angeordnet und in der Wandung befestigt, der als Mitnehmer für den Zentrierbohrer ausgenutzt wird. Der Zentrierbohrer ist auf der Außenwandung seines Sockels mit Dichtungen versehen. Wenn der Sockel in die Innenwandung des Antriebsteiles eingesteckt wird, verhindern die Dichtungen das Eindringen von Bohrstaub in den Raum zwischen den beiden Wandungen und ermöglichen stets eine leichte Trennung dieser Teile. Aussparungen oder ein Ansatz des Sockels ragen hinter den Bolzen und werden so von diesem mitgenommen. In beiden Fällen wird ein leichter Einbau und Ausbau Die Löcher und/oder Längsnuten im Sockel oder Hohlzylinder des Zentrierbohrers ermöglichen auch bei der Zentrierbohrung eine ständige Strömung des Bohrkleins.

Zur näheren Erläuterung der Erfindung werden im folgenden Ausführungsbeispiele anhand der Zeichnungen beschrieben. Diese zeigen in
- Fig. 1: eine perspektivische Ansicht einer Diamantbohrkrone mit Schaftrohr und einer Kupplung zum Rohrgewindeanschluß,
- Fig. 2: eine geschnittene Seitenansicht der miteinander verbundenen Teile gemäß Fig. 1,
- Fig. 3: die teilweise geschnittene Seitenansicht eines Rohrgewindeanschlusses mit kegelförmigem Umlenkteil,
- Fig. 4: Die teilweise geschnittene Seitenansicht eines Zentrierbohrers,
- Fig. 5: eine Abwandlung des Zentrierbohrers gemäß Fig. 2,
- Fig. 6: eine andere Sockelform des Zentrierbohrers,
- Fig. 7: eine Abwandlung der Fig. 2 mit über die Wandung des Kupplungsteils hinaus zu Vorsprüngen verlängerten Bolzen.
- Fig. 8: einen Ausschnitt der Fig. 7 mit eingesetztem Zentrierbohrer,
- Fig. 9: eine explodierte Seitenansicht der Fig. 7,

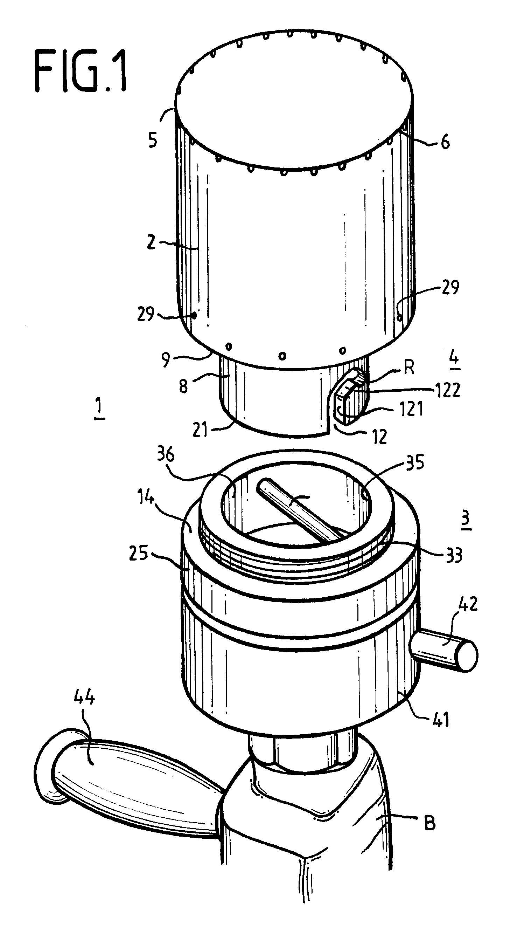

In Fig. 1 ist in perspektivischer Darstellung eine Diamantbohreinrichtung 1 dargestellt. Eine Bohrmaschine B ist mit einem Schaftrohr 2 über ein Antriebsteil 3 und ein Kupplungsteil 4 kuppelbar. Das Antriebstell 3 kann durch seinen Gewindeanschluß 45 direkt mit dem Rohrgewindeanschluß der Bohrmaschine B verbunden werden. Der Gewindeanschluß 45 kann als auswechselbarer Adapter 451 ausgebildet sein, um die Bohreinrichtung für Bohrmaschinen mit abweichenden Gewinden verwendbar zu machen. Das Schaftrohr 2 ist an einer Stirnseite mit einer Bohrkrone 5 aus kronenartig angeordneten Diamanten 6 versehen. Diese Diamanten 6 (oder andere Hartstoffe) können als Stücke eingesetzt und verlötet oder einer erhärtenden, die Bohrkrone 5 des Schaftrohres 2 bildenden Füllmasse beigemengt oder durch Laser oder dergleichen aufgeschweißt werden. Die Stirnseite 5 kann auch mit Einschnitten oder dergl. für den Wasserdurchtritt versehen sein. An der anderen Stirnseite des Schaftrohres 2 ist das Antriebsteil 3 befestigt, beispielsweise über das Kupplungsteil 4, das mit dem Schaftrohr 2 eine Einheit bildet oder mit ihm fest verbindbar ist. Dieses Kupplungsteil 4 ist so hohlzylindrisch ausgebildet und mit dem Schaftrohr 2 verbunden, daß Flüssigkeit oder Saugluft mit oder ohne Bohrklein hindurchtreten kann. Auch das Antriebsteil 3 ist hohlzylindrisch ausgebildet und erlaubt den Durchtritt von Luft oder Flüssigkeit ohne oder mit Bohrklein. Die Innenwandung 36 des Antriebsteils 3 und die Außenwandung 8 des Kupplungsteils 4 sind im Falle einer Kuppelbarkeit der Teile 3,4 so bemessen, daß das Teil 3 mit seinem Kupplungsbereich 35 in oder über den Kupplungsbereich 8 des Kupplungsteils 4 geschoben werden kann. Im praktischen Betrieb hat sich eine Konstruktion bewährt, bei der das Antriebsteil 3 mit seiner Außenwandung in die Innenwandung des Kupplungsteiles 4 schiebbar ist. In beiden Fällen sind das Antriebsteil 3 mit Vorsprüngen 11 senkrecht zur Längsachse des Systems und das Kupplungsteil 4 mit Nuten 12 versehen, die beim Kuppeln der beiden Teile 3,4 ineinandergreifen und mittels einer Raste R bajonettartig verbunden werden können.

Der längs einer Durchmesserlinie des Innenraums des Antriebs teils 3 angeordnete und in den Wandungen befestigte Bolzen 11 dient einerseits zur Erzielung und Stabilisierung der Vorsprünge und andrerseits als Antriebsorgan für Zusatzwerkzeuge wie beispielsweise einen Zentrierbohrer. Als Teil des Strömungsweges für das Bohrklein sind der Bolzen 11 und die ihn tragende Wandung 35,36 so bemessen, daß der Durchtritt des Bohrkleins nicht zu Verstopfungen führen kann. Durch Ausbildung seines Querschnitts begünstigt der Bolzen 11 die Strömung und verhindert Ablagerungen von Bohrstaub. Durch den den im Strömungsbereich befindlichen Teil des Bolzens 11 werden evtl. in diesen Bereich noch eindringende größere erbohrte Bohrkleinteile vom weiteren Strömungsweg ferngehalten, aus dem sie nur schwer entfernbar wären. Im Strömungsbereich vor dem Bolzen 11 können solche Bohrkleinteile noch durch einfaches Trennen der Kupplungsteile 3,4 entfernt werden.

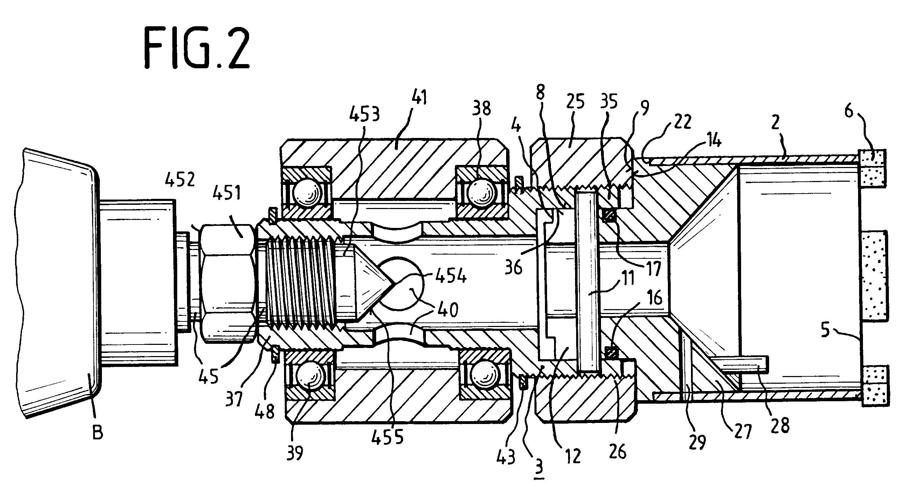

Ein Klemmring 25 ist auf einem Schraubgewinde 26 des Antriebsteil 3 drehbar gelagert und in Achsrichtung des Gestänges 2,3,4 so verschiebbar, daß die dem Schaftrohr 2 zugewandte Stirnseite 14 des Klemmringes 25 gegen die Stirnseite 9 des Schaftrohres 2 oder einen besonderen Kragen des Kupplungsteiles 4 gepreßt werden kann. Mit dieser Pressung zieht der Klemmring 25 den Bolzen 11 fest in die Raste R und bewirkt zugleich eine dichte Klemmung der beiden senkrecht zur Achsrichtung angeordneten Klemmflächen 9,14. In der im wesentlichen zylindrischen Wandung 8 des Kupplungsteiles 4 sind die Nuten 12 einander diametral gegenüberliegend angeordnet. Die Vorsprünge 11 im Antriebsteil 3 wirken ebenfalls symmetrisch. Die Nuten 12 und die Vorsprünge 11 sind so bemessen, daß die Vorsprünge 11 in die Nuten 12 eingreifen können und von diesen bis in die Raststellung R geführt werden. Die benachbarten Wandungen 8,36 von Antriebsteil 3 und Kupplungsteil 4 sind in Fig. 1 gegeneinander abgedichtet, beispielsweise gemäß Fig. 2 durch einen O-Ring 16 in einer Ringnute 17. Die Teile 3 und 4 können auch als eine Einheit ausgebildet werden, wobei Vorsprünge 11, Nuten 12 und Kupplungsmittel 25, 9, 14 unnötig werden. Der Innenbolzen 11 ist aber auch für diesen Fall vorteilhaft zur Wirbelbildung der Strömung, zur Rückhaltung größerer Brocken des Bohrkleins aus dem Strömungsweg oder als Antriebsmittel für einen leicht auswechselbaren Zentrierbohrer.

Fig. 2 zeigt die Anordnung nach Fig. 1 in geschnittener Seitenansicht, um die strömungsgünstige Ausbildung des Strömungsweges für das Bohrklein und den O-Ring 16 und die Ringnute 17 für den Fall der Kupplung der Teile 3, 4 zu verdeutlichen. Das Antriebsteil 3 kann als auswechselbares Kupplungsbauteil für eine Vielzahl von Schaftrohren 2 verwendet werden, die unterschiedliche Längen und Durchmesser haben können und jeweils mit dem Kupplungsteil 4 versehen sind. Das Kupplungsteil 4 kann selbst fest mit der Stirnseite 22 des Schaftrohres 2 verbunden sein. Es ist jedoch möglich, auch das Kupplungsteil 4 auswechselbar zu gestalten, um den stärkeren Verschleiß der Bohrkronen 5 zu berücksichtigen.

Das Antriebsteil 3 bildet mit einem Gehäuse 41 ein Bauteil. Das Gehäuse 41 ist mit einem in Fig. 1 sichtbaren Anschluß 42 für Flüssigkeitszufuhr oder Luftabsaugung versehen. Das Antriebsteil 3 hat einen Bereich 37, der in dem Gehäuse 41 mittels zweier Lager 38, 39 drehbar gelagert ist und durch Öffnungen 40 die Innenräume des Gehäuses 41 und des Bereiches 37 verbindet. Der Abstand dieser Kugellager wird in Fig. 2 durch Eindrehungen in der Wandung des Gehäuses 41 erzielt. Zwischen den Kugellagern 38,39 ist der Bereich 37 mit Öffnungen 40 versehen, durch die wahlweise Flüssigkeiten oder Saugluft hindurchtreten können, ggf ergänzt durch das Bohrklein. Die weitere Ableitung oder Zuführung erfolgt durch eine Anschluß öffnung 42 in der Wandung des Gehäuses 41. Die Sicherung gegen Verschieben und oder Fressen der gegeinander rotierenden Teile geschieht durch Wellensicherungsringe 43,48. Der Bolzen 11 befindet sich fest in dem drehbaren Teil 35,36,37, das mit seinem Rohrgewindeanschluß 45 und ggf dem Adapter 451 auf dem Gewindeanschluß der Bohrmaschine B befestigt wird. Da die fest miteinander verbundenen Teile 3,11,35,36,37 drehbar sind, kann ein Sechskant 452 mit dem Antriebsteil 3 kombiniert werden. Der Bolzen 11 erlaubt aber auch, diesen Sechskant 452 einzusparen und dadurch zugleich die Baulänge zu verringern. Ein Schlüssel mit einer an die Form des Bolzens 11 angepaßten Öffnung kann dann nämlich in die Öffnung des gesonderten Antriebsteiles 3 eingeführt und über den Bolzen 11 gestülpt werden, um diesen festzuhalten oder mitsamt seiner Halterung drehen zu können. Die dem Teil 3 zugewandte Stirnseite des Sechskants 452 kann aber auch so bemessen sein, daß sie direkt gegen den Innenring des mit dem Teil 3 abschließende Lagers 39 drückt und dadurch den Sicherungsring 48 einspart. Auch diese Bemessung kann Baulänge einsparen.

Der im Gehäuse 41 drehbare Bereich 37 ist mit Öffnungen 40 versehen, die einen Durchtritt des Bohrkleins aus dem Innenraum zum Absauganschluß 42 ermöglichen. Diese Öffnungen können, wie in Fig. 2 sichtbar, kreisförmig sein. Es hat sich aber gezeigt, daß eine ovale oder elliptische Form vorteilhafter sein kann, um einen guten Durchtrittseffekt bei guter Stabilität der mit den Öffnungen versehenen Wandung zu erzielen. Vom Rohrgewindeanschluß 45 ausgehend ist im Innenraum des Bereiches 37 ein Umlenkkörper 453 vorgesehen, der die im wesentlichen axial aus dem Schaftrohr 2 austretende Strömung des Bohrkleins durch die Löcher 40 in den Anschluß 42 leitet und das Absetzen von Bohrstaub im Bereich der Löcher verhindert. Vorzugsweise ist der Umlenkkörper 453 mit einer kegelförmigen Spitze 454 versehen. Die Löcher 40 sind mit ihren Mittelpunkten in einer Querschnitts ebene angeordnet und die Spitze 454 des Umlenkkörpers 453 liegt ebenfalls im Bereich dieser Ebene. Die Flanken 455 des Umlenkkörpers 453 enden außerhalb des Bereiches der Löcher 40, so daß sich evtl Bohrstaub bis zu der der Strömung abgewandten Kante der Löcher 40 absetzen und eine die Strömung leitende Fläche bilden oder vervollständigen kann.

Zur Begünstigung der Strömung im Schaftrohr 2 ist im Bereich des Übergangs zum Antriebsteil eine Schräge 27 vorgesehen. Diese Schräge 27 ist hier linear angedeutet, kann aber eine Kurvenform aufweisen. Da der erbohrte Bohrkern im Falle des Absaugbetriebes der Bohreinrichtung in das Schaftrohr 2 gesaugt werden und dabei den Fußpunkt ventilartig sperren könnte, ist dem Fußpunkt ein Vorsprung 28 zugeordnet, der den Bohrkern in einer vom Fußpunkt entfernten Stelle hält und so die Absperrung verhindert. Als Vorsprünge 28 können Gewindebolzen verwendet werden. Um zu verhindern, daß ein größeres Bohrklein im Schaftrohr auch den Strömungsweg blockiert, sind unterhalb des evtl. noch blockierbaren Bereiches Öffnungen 271 durch die Schräge 27 und die Wandung 2 nach außen geführt. Diese Öffnungen 271 bewirken stets eine zusätzliche Strömung zur Beseitigung pulverförmiger Ablagerungen im Strömungsweg.

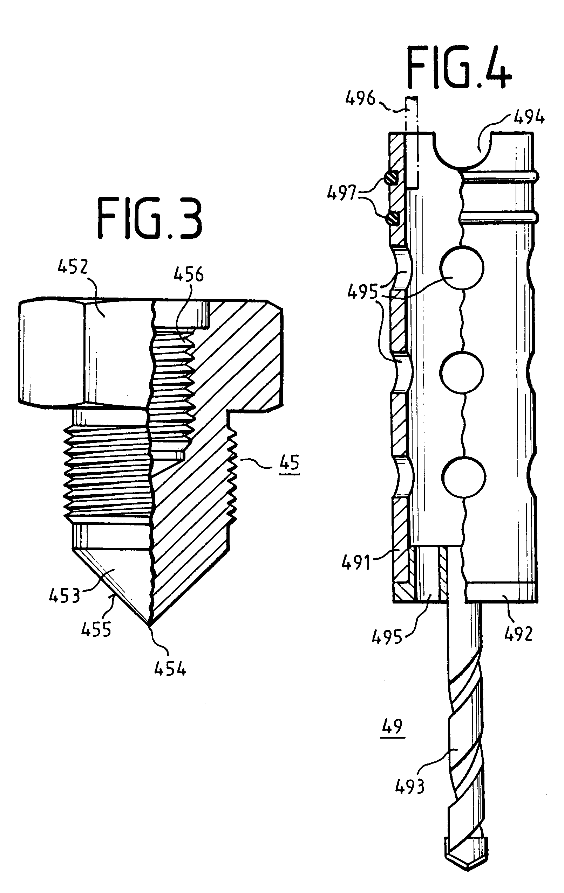

Fig. 3 zeigt ein gesondertes Bauteil 45, in dem der Umlenkkörper 453 mit dem Rohrgewindeanschluß 456 zu einer auswechselbaren Einheit kombiniert ist, die in das Antriebsteil 3 einschraubbar ist. Da viele Bohrmaschinen nach Durchmesser und/oder Gewinde unterschiedliche Rohrgewindeanschlüsse haben, ermöglicht es dieses Bauteil 45 in Verbindung mit der Kupplung 3,4, ein Sortiment von Diamantbohrkronen 2 unterschiedlicher Durchmesser mit einem einzigen Typ eines Antriebs- und Absaugsystems zu betreiben und zugleich diesen einen Typ durch ein Sortiment entsprechender Bauteile 45 für die diversen Bohrmaschinen unterschiedlicher Typen verwendbar zu machen.

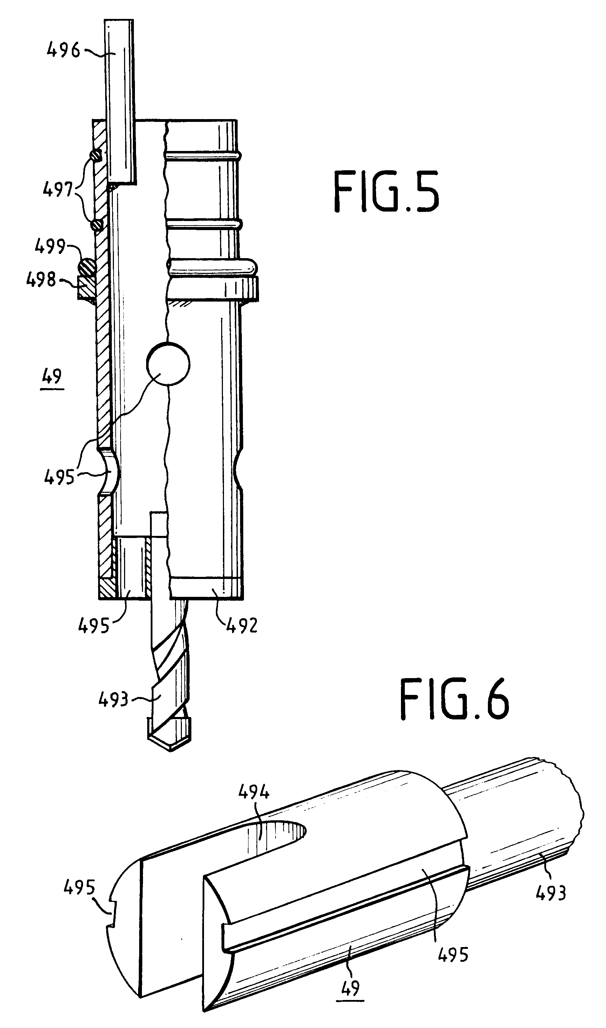

Fig. 4 und Fig. 5 zeigen zwei Ausführungsbeispiele für einen Zentrierbohrer 49, der einerseits durch seine Luftwege strömungsfördernd an das Absaugsystem angepaßt ist und der andrerseits leicht auswechselbar in das Schaftrohr 2, die Kupplung 4 oder das Antriebsteil 3 einsetzbar ist. Außerdem ist der Bohrer 49 oder sein Sockel mit Aussparungen 494 oder Mitnehmern 496 versehen, die beim Einsetzen des Zentrierbohrers 49 den Bolzen 11 erfassen oder von ihm erfaßt und mitgenommen werden. Der Sockel enthält einen Hohlzylinder 491, der an seinem vorderen Ende 492 den eigentlichen Zentrierbohrer 493 trägt und an seinem hinteren Ende mit an den Bolzen 11 angepaßten Aussparungen 494 oder Ansätzen 496 versehen ist. Die Wandungen sind mit Öffnungen 495 versehen, die beim Zentrierbohren den Innenraum des Bohrers und des Antriebsteiles 3 mit dem Bohrbereich verbinden. Diese Konstruktion hat sich so gut bewährt, daß die Bohreinrichtung auch ohne Bohrbetrieb zur Staubentfernung dienen kann. Der Sockel 491 des Zentrierbohrers 49 ist einheitlich an diesen einen Kupplungstyp angepaßt und zwar einheitlich für Zentrierbohrer 49 aller Längen. Die Kupplungen 3 und 4 sind mit einem Aufnahmebereich versehen, der den Zentrierbohrer 49 zugleich richtig positioniert und antreibt. Damit der in das Schaftrohr 2 bzw. die Kupplung 4 oder das Antriebsteil 3 bis zum Bolzen 11 gesteckte Sockel des Zentrierbohrers 49 nicht in der Aufnahme verklemmt, also stets leicht auswechselbar ist, sind auf dem Umfang des Sockels bzw. des Zentrierbohrers 49 zwei O-Ringe 497 angeordnet, beispielsweise in entsprechenden Nuten. Diese O-Ringe reinigen bei jeder Auswechslung des Zentrierbohrers 49 den Aufnahmebereich von Bohrstaub und können dennoch zugleich die Lage des Zentrierbohrers 49 sicher stabilisieren. Ein Kragen 498 des Sockels in Fig. 5 mit einer weiteren Dichtung 499 verhindert das Eindringen von Bohrstaub in den Aufnahmebereich des Sockels.

Fig. 6 zeigt eine andere Ausbildung für den Zentrierbohrer 49, bei der der den eigentlichen Zentrierbohrer 491 tragende Sockel mit Längsnuten 493 versehen ist, die einen ausreichenden Luftweg für die Absaugung freihalten sollen.

Die Ausführungsformen nach den Fig. 4,5 und 6 ermöglichen neben einer guten Strömung für das Bohrklein auch bei Verwendung von Zentrierbohrern die Verwendung von längeren Zentrierbohrern 49,491 als bisher möglich, sowie eine extrem einfache Handhabung.

Der soweit beschriebene Zentrierbohrer 49 ist auch bei größeren Längen recht stabil und benötigt keine besondere Befestigung, ist also nur in die jeweilge Aufnahme einzustecken. Sollte eine noch größere Stabilität bei großen Längen des Zentrierbohrers 49 erwünscht sein, können von der Vorderseite des Schaftrohres 2 ein oder mehrere Stabilisatoren in das Schaftrohr 2 eingeführt werden, die für den Betrieb keiner besonderen Befestigung bedürfen. Ein solcher Stabilisator besteht beispielsweise aus zwei Distanzscheiben, deren Umfang an die Innenseite des Schaftrohres 2 angepaßt ist und die durch eine Hülse, insbesondere ein Präzisionsrohr miteinander verbunden sind. Der Innendurchmesser der Hülse ist dabei etwas größer gewählt als der Durchmesser des Zentrierbohrers 49 und ggf. seines Sockels. Für die Verwendung bei unterschiedlich langen Schaftrohren kann die Hülse aber auch teleskopartig aus zwei Teilen zusammengesetzt sein.

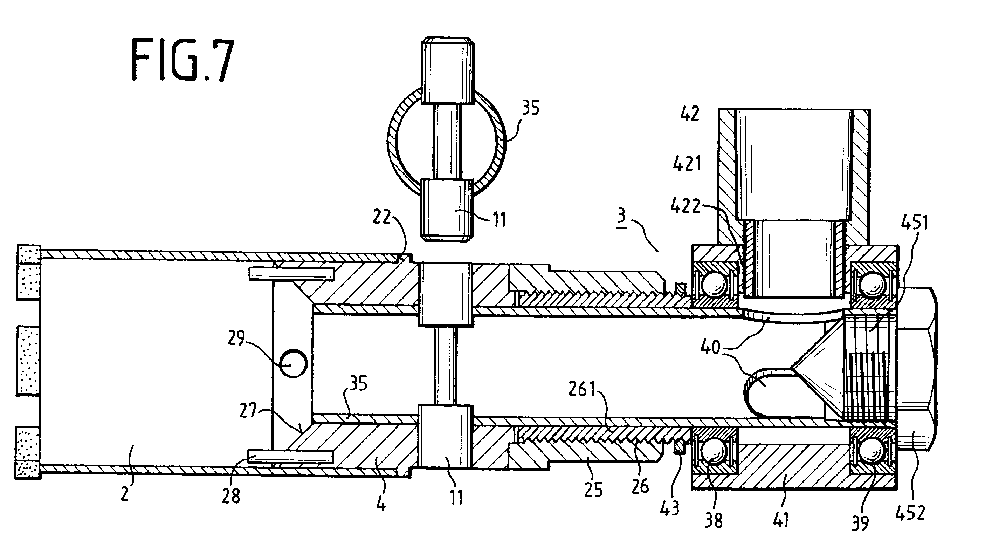

Fig. 7 zeigt eine Abwandlung der in Fig. 2 dargestellten Anordnung, bei der die Innenwandung des Antriebsteiles von den Löchern 40 bis in das Schaftrohr 2 reicht und mit nacn außen über die Wandung 35 des Antriebsteiles hinaus ragenden Vorsprüngen des Bolzens 11 versehen ist. In Fig. 7 ist der Innendurchmesser des mit den Schaftrohr 2 verbundenen Kupplungsteiles 4 soviel größer bemessen als der Außendurchmesser des Antriebsteiles 3, daß das Kupplungsteil 4 über das Antriebsteil 3 schiebbar ist. Dabei greifen die nach außen über die Außenwandung 35 des Antriebsteiles 3 ragenden Vorsprünge des Bolzens 11 in die Nuten 12 des Kupplungsteiles 4 ein und ermöglichen so die Kupplung der beiden Teile 3 und 4, die auch hier über einen Klemmring 25 verklemmbar sind. Das Gewinde 26 für den Klemmring 25 ist hier auf einer gesonderten Buchse 261 angeordnet, die auf der Wandung 35 befestigt ist und vorzugsweise aus einem Kunststoff, z.B. einem Polyamid besteht. Um den Durchfluß des Bohrkleins möglichst wenig zu behindern, ist die Wandung 35 ganz oder nahezu vorsprunglos ausgebildet und der Bolzen 11 im Innenraum dieser Wandung 35 mit einem kleineren Durchmesser bemessen als im Bereich von Wandung und Vorsprüngen. Für größere Brocken des Bohrkleins dient der Bolzen 11 aber auch hier als Rückhaltesieb. Die Strömung für das abgesaugte Bohrklein wird weiterhin durch eine Formgebung der Öffnungen 40 begünstigt, bei der der Raum zwischen den Kugellagern 38, 39 so weit wie möglich ausgenutzt wird, ohne die Stabilität des Gehäuses 41 zu gefährden. Das wird hier durch eine ovale Form der Öffnungen 40 erzielt, deren dem Schaftrohr 2 abgewandte Begrenzung mit dem Kegelfuß des Teils 45 in etwa einer Querschnittsebene liegt. Die als Deckel des Schaftrohres 2 ausgebildete Kupplung 4 ist aus Kunststoff, hat daher durch geringes Gewicht eine geringe Schwungmasse und sorgt für Laufruhe im Betrieb.

Der gegenseitige Abstand der Lager 38, 39 ist durch, das Gehäuse 41 bestimmt, ihre Lage auf der Wandung 35 einerseits durch die dort befestigte Buchse 261 und andrerseits durch die gegen das Kugellager 39 drückende Rückseite des Sechskants 452 definiert.

Die Anschlußöffnung 42 besteht aus einem Kunststoffteil, das auf einer Metallhülse 421 befestigt ist, die selbst in einer Öffnung 422 des Gehäuses befestigt ist. Die Buchse 422 ist an ihrer Außenseite gerändelt, mit Rillen vorzugsweise parallel zur Achsrichtung der Buchse 421. Durch diese Rändelung und einen ggf. durch Aufschrumpfen erzielten Preßsitz zwischen der Metallbuchse und den Kunststoffteilen 421 ,42 bzw. 422 und die dadurch bewirkte Fließpressung wird ein besonders stabiler Anschluß für den Absaugschlauch erzielt. Der Sicherungsring 43 auf der Buchse 261 verhindert, daß sich der Klemmring 25 und das Gehäuse 41 miteinander verklemmen oder verschweißen können, wenn sie sich während des Betriebes berühren, beispielsweise, bei Entkupplung des Schaftrohres 2, noch drehendem Antriebsteil (mit Klemmring) und stehendem Gehäuse 41. Wegen der unterschiedlichen Drehzahlen könnten bei einer solchen Berührung Temperaturen entstehen, die eine Verschweißung, Verklebung oder dergl. bewirken können.Die Verbindung der Metallhüsen des Schaftrohres 2 mit der aus Kunststoff gefertigten Kupplung 4 sowie die Verbindung der Wandung 35 des Antriebsteiles 3 mit der Gewindebuchse 261 sind in ähnlicher Weise wie bei der Buchse 421 durch Rändelung und Fließpressung fest miteinander verbunden.

Die schräge Flanke 27 und die Vorsprünge 28 im Fuß des Schaftrohres 2 dienen dazu, eine Blockade durch den Bohrkern zu vermeiden. Löcher 29 durch die Wandung des Schaftrohres 2 im Bereich des Übergangs zur Wandung 35 des Antriebsteiles dienen dazu, im Falle einer Sperrung durch größere Bruchstücke des Bohrkerns noch eine Strömung zur Beseitigung des Bohrstaubs zu ermöglichen. Solche Löcher können groß wie in Fig. 7 oder klein wie in Fig. 2 sein. In beiden Fällen sollte der erforderliche Gesamtquerschnitt ermittelt und beachtet werden.

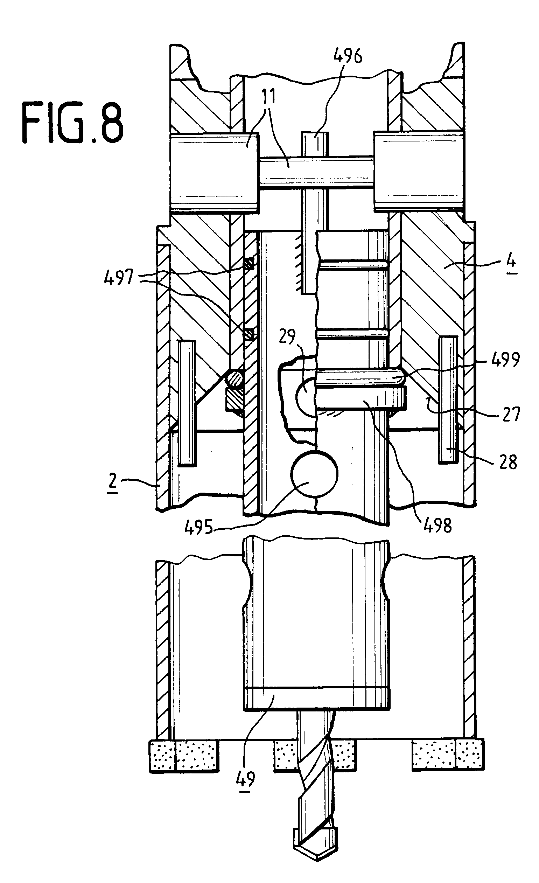

Fig. 8 zeigt einen Ausschnitt der Fig. 7 mit eingestecktem Zentrierbohrer 49 gemäß Fig. 5. Es ist deutlich zu erkennen, daß der Fuß des eingesteckten Sockels 49 vor dem Bolzen 11 endet, diesen also in keinem Fall berührt. Der Dichtring 499 liegt an der Stirnseite der Wandung 35 des Antriebsteiles 3 an und wird durch den Kragen 498 gegen diese Stirnseite gedrückt. Durch das verbleibende Spiel des Sockels relativ zum Bolzen 11 ist sichergestellt, daß die Dichtwirkung des Ringes 499 auch bei starkem Sog und/oder Druck erhalten bleibt.

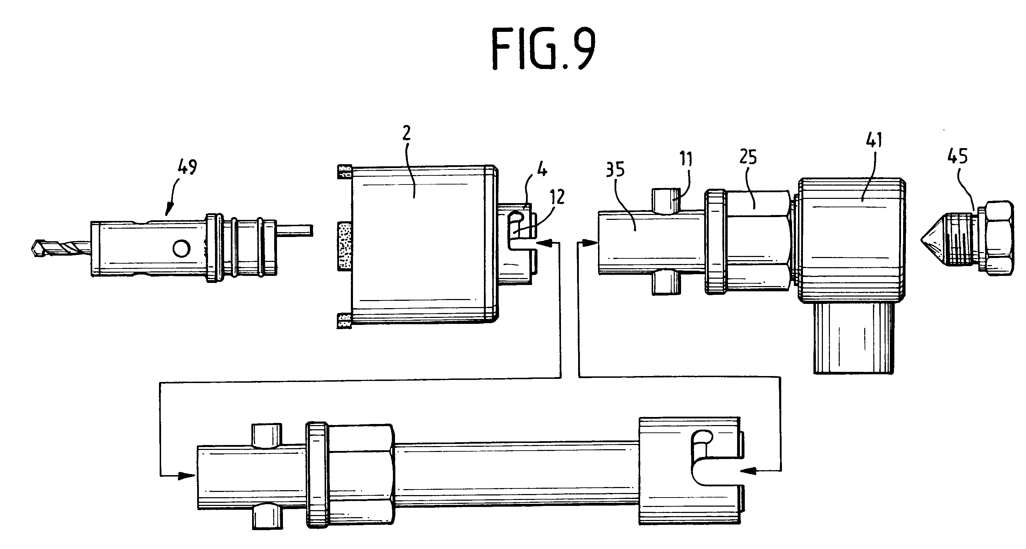

Fig. 9 zeigt eine Seitenansicht der Fig. 7 in Explosionsdarstellung zusammen mit einem Zentrierbohrer und einem Verlängerungsteil. Bei einem erprobten Beispiel reichten vier auf dem Umfang verteilte Löcher 29 mit je 4 mm Durchmesser aus, den Bohrstaub auch bei Blockade die für eine Absaugung erforderliche Strömung zu sichern.

## Patentansprüche

1. Bohreinrichtung mit Kraftübertragung von einem hohlzylindrischen Antriebsteil (3) auf ein Schaftrohr (2) mit Bohrkrone (5), bei der das Antriebsteil (3) drehbar in einem Gehäuse (41) durch zwei darin mit Axialabstand angeordneten Lagern (38,39) gelagert ist und das Gehäuse (41) zwischen den Lagern mit einem Anschlußteil (42) für eine Saug- und/oder Spüleinrichtung versehen ist, bei der das Antriebsteil (3) in seiner Wandung zwischen den Lagern (38,39) wenigstens eine Öffnung (40) für den Durchtritt des Bohrkleins vom Innenraum des Antriebsteils (3) zum Anschlußteil (42) aufweist, dadurch gekennzeichnet, dass im Antriebsteil an dem der Bohrkrone (5) abgewandten Ende ein Strömungsumlenkteil (453) mit einer im Innenraum des Antriebsteils (3) angeordneten, dem Schaftrohr (2) zugewandten Strömungsumlenkfläche (455) vorgesehen ist, die bis zu der dem Schaftrohr abgewandten Begrenzung der Öffnungen (40) reicht, und weiter Mittel (11,27,28,29,495,496) zur Vermeidung von Verstopfungen des Strömungsweges vorgesehen sind.

2. Bohreinrichtung nach Anspruch 1, dadurch gekennzeichnet, daß die Öffnung (40) im Antriebsteil (3) eine solche Ausdehnung hat und daß das Strömungsumlenkteil (453) eine im wesentlichen kegelförmig ausgebildete Strömumgsumlenkfläche (455) hat und daß Öffnung (40) und Strömungsumlenkteil (453) einander so zugeordnet sind, daß die Spitze (454) des Kegels in Richtung auf das Schaftrohr (2) angeordnet ist, mit den Öffnungszentren in einer Querschnittsebene liegt und mit den Flanken (455) bis zu der dem Schaftrohr abgewandten Begrenzung der Öffnung (40) reicht.

3. Bohreinrichtung nach einem der Ansprüche 1-2, dadurch gekennzeichnet, daß die Öffnung (40) so groß ausgebildet ist, daß sie den Abstand zwischen den Lagern (38,39) soweit wie möglich ausnutzt, ohne die Stabilität der Wandung zu gefährden.

4. Bohreinrichtung nach einem der Ansprüche 1 - 3, dadurch gekennzeichnet, daß die Öffnung eine ovale Form hat.

5. Bohreinrichtung nach einem der Ansprüche 1 - 4, dadurch gekennzeichnet, daß mehrere Öffnungen (40) vorgesehen sind, deren in axialer Richtung liegende Begrenzungskanten in einer Querschnittsebene liegen.

6. Bohreinrichtung nach einem der Ansprüche 1 - 5, dadurch gekennzeichnet, daß das Strömungsumlenkteil (453) durch einen in das Antriebsteil (3) einschraubbaren Rohrgewindeanschluß (45) gebildet wird, der an seiner Außenseite ein Anschlußgewinde für die Verbindung mit handelsüblichen Bohrmaschinen hat.

7. Bohreinrichtung nach einem der Ansprüche 1 - 6, dadurch gekennzeichnet, daß im Innenraum des Antriebsteiles (3) ein längs einer Durchmesserlinie angeordneter und in den Wandungen (35) befestigter Bolzen (11) vorgesehen ist, der als Sieb für Brocken aus dem abgesaugten Bohrklein dient, die die Öffnung(en) (40) verstopfen könnten.

8. Bohreinrichtung nach Anspruch 7, dadurch gekennzeichnet, daß im Antriebsteil (3) oder im angetriebenen Teil des Schaftrohres (2) ein Lager für die Aufnahme eines Zentrierbohrers (49) vorgesehen ist, und daß Lager und/oder Zentrierbohrer (49) so ausgebildet sind, daß bei eingesetztem Zentrierbohrer (49) Strömung mit dem vom Zentrierbohrer bewirkten Bohrklein kleiner Korngrößen durch die Steckverbindung hindurch in den Innenraum des Antriebsteils treten kann, wobei ein Sockel (491) oder Ansatz (498) des Zentrierbohrers (49) zur Erzielung einer Mitnahmeverbindung über oder neben den Bolzen (11) steckbar ist.

9. Bohreinrichtung nach Anspruch 8, dadurch gekennzeichnet, daß der Zentrierbohrer (493) mit dem Sockel (491) eine Einheit bildet, wobei der Sockel (491) aus einem hohlzylindrischen Rohr (491) gebildet wird, das an einer Stirnseite einen kurzen Zentrierbohrer (493) trägt, an seinen Wandungen Öffnungen (495) für den Durchtritt der Strömung aufweist und an seiner anderen Stirnseite (494) in ein im Strömungsweg angeordnetes Rohrteil (35, 4) des Sohaftrohres (2), der Kupplung (4) oder des Antriebsteiles (3) einsteckbar ist.

10. Bohreinrichtung nach Anspruch 8, dadurch gekennzeichnet, daß Lager und Sockel (491) so aneinander angepaßt sind, daß der Zentrierbohrer (49) leicht längs einer solchen Strecke einsteckbar ist, daß er eine stabile Halterung erhält, und daß zum Fernhalten von Bohrstaub aus dem Haltebereich auf dem Sockel (491) Dichtungen (497,499) vorgesehen sind.

11. Bohreinrichtung nach einem der Ansprüche 1 - 10, dadurch gekennzeichnet, daß im Sockelbereich des Schaftrohres (2) Schrägen (27), Vorsprünge (28) oder dergl vorgesehen sind, die einen Verschluß des Strömungsweges durch den erbohrten Bohrkern oder seine Teile während des Betriebes weitgehend verhindern, und/oder daß in der Wandung des Schaftrohres (2) im Bereich des Schaftrohrsockels (27,28) Löcher (29) vorgesehen sind, die bei durch einen erbohrten Kern oder seine Teile blockierter Öffnung (27,28) eine seitliche Strömung zum Abtransport von Bohrstaub bewirken oder aufrechterhalten.

12. Bohreinrichtung nach einem der Ansprüche 1-11, dadurch gekennzeichnet, daß das Anschlußteil (42) über eine gerändelte Metallbuchse (421) mit einer Öffnung (422) des Gehäuses (41) verbunden ist, daß die Metallbuchse (421) mit einem Teil in der Öffnung befestigt ist und mit einem anderen Teil aus der Öffnung (422) des Gehäuses (41) herausragt, an dem das Anschlußteil befestigt ist, und daß die Außenwandung der Metallbuchse (421) mit der Gehäuseöffnung (422) und mit dem Anschlußteil (42) im Preßsitz verbunden ist.

## Claims

1. A drilling device in which the force is transmitted from a hollow-cylindrical drive member (3) to a tubular shank (2) having a drill bit, wherein the drive member (3) is rotatably mounted in a housing (41) by means of two axially spaced bearings provided therein and wherein the housing (41) is provided between the bearings (38,39) with a port (42) for a suction and/or flushing device and wherein the drive member (3) is provided with at least one opening (40) in its wall (35) between the bearings (38,39) for the passage of drill cuttings from the interior of the drive member to the port (42),
characterized in that
in the drive member (3) on its side facing away from the tubular shank (2) there is provided a flow deflection member (453) providing in the interior of the drive member (3) a flow deflection surface (455) which faces the tubular shank and which is extended to the delimitation of the opening (40) facing away from the tubular shank (2), and further means (11,27,28,29,40,453) for avoiding clogging of the flow path.

2. A drilling device according to claim 1, characterized in that the opening (40) in the drive member (3) is shaped with such an extension and that the flow deflection member (453) is provided with a substantially conically configured flow deflection surface and that opening and flow deflection member (453) are correlated to each other so that the cone tip (454) is disposed in the direction toward the tubular shank (2) and lies in a cross-sectional plane with the centers of the openings (40) while the flanks (455) of the cone extend to the delimitation of the openings (40) facing away from the tubular shank (2).

3. A drilling device according to one of the claims 1-2, characterized in that the opening (40) is shaped to utilize the space between ball bearings (38,39) to the greatest extent possible without endangering the stability of the wall.

4. A drilling device according to one of the claims 1-3, characterized in that the opening has an oval shape.

5. A drilling device according to one of the claims 1-4, characterized in that there are provided several openings (40) the deliminations of which in axial direction lie in one cross-sectional plane.

6. A drilling device according to one of the claims 1-5, characterized in that the deflection member (453) is formed by a threaded pipe connection (45) that can be screwed into the drive member (3) and that, on its exterior, is provided with a connecting thread for connection with commercially available drilling machines.

7. A drilling device according to one of the claims 1-6, characterized in that a pin (11) is provided in the interior of the drive member (3), is arranged along a diameter line and is fastened in the walls (35) so as to serve as a screen for chunks included in the extracted drill cuttings of a size that could clog the opening(s) (40).

8. A drilling device according to claim 7, characterized in that a bearing (11) is provided in the drive member (3) or in the driven portion of the tubular shank (2) to accomodate a center drill (49); and bearing and/or center drill (49) are configured in such a manner that, with the center drill (49) inserted, drill cuttings of small grain sizes produced by the center drill are able to flow through the plug-in connection into the interior of the drive member, with a base (491) or attachment (498) on the center drill (49) being insertable above or next to the pin (11) so as to produce a carry-along connection.

9. A drilling device according to claim 8, characterized in that the center drill (493) forms a unit with the base (491), with the base (491) being formed of a hollow-cylindrical tube (491) which at its one end face carries a short center drill (493) , is provided with openings (495) in its walls for the passage of the flow and, at its other end face (494), is insertable into a tube section (35,4) of the tubular shank (2) disposed in the flow path, into the coupling (4) or into the drive member (3).

10. A drilling device aacording to claim 8, characterized in that the bearing and the base (491) are adapted to one another in such a manner that the center drill (49) can easily be inserted along such a path so that it is given a stable mount and seals (497,499) are provided on the base (491) to keep drilling dust out of the region of the mount.

11. A drilling device according to one of the claims 1-10, characterized in that slopes (27), projections (28) or the like are provided in the base region of the tubular shank (2) so as to substantially prevent blockage of the flow path by the drilled-out core or parts thereof during operation; and/or holes (29) are provided in the wall of the tubular shank (2) in the region of the tubular shank base (27,28) so as to effect or maintain a lateral flow to transport away the drilling dust if an opening (27,29) is blocked by a drilled-out core or parts thereof.

12. A drilling device according to one of the claims 1-11, characterized in that the port (42) is connected by way of a knurled metal sleeve (421) with an opening (422) in the housing (41); part of the metal sleeve (421) is fastened in the opening and another part projects from the opening (422) in the housing (41) to which the port is fastened; and the outer wall of the metal sleeve (421) is connected in a press fit with the housing opening ( 422) and with the port (42).

## Revendications

1. Dispositif de forage comprenant la transmission de la force motrice d'une pièce d'entraînement cylindrique creuse (3) à une tige tubulaire (2) portant une couronne de fleuret (5), dans lequel la pièce d'entraînement (3) est montée rotative dans un corps (41) du dispositif au moyen de deux paliers (38, 39) placés axialement à distance l'un de l'autre dans ce corps (41), lequel est pourvu, entre les paliers, d'une pièce de raccordement (42) pour un dispositif d'aspiration et/ou de circulation de fluide, et dans lequel la pièce d'entraînement (3) présente, dans sa paroi entre les paliers (38, 39), au moins un orifice (40) pour le passage des déblais de forage depuis l'espace intérieur de la pièce d'entraînement (3) vers la pièce de raccordement (42), caractérisé en ce qu'un déflecteur (453) est disposé à l'intérieur de la pièce d'entraînement, à l'extrémité éloignée de la couronne de fleuret (5), et est pourvu d'une surface de déviation de l'écoulement (455) située dans l'espace intérieur de la pièce d'entraînement (3), surface qui est dirigée vers la tige tubulaire (2) et s'étend jusqu'à la délimitation des orifices (40) éloignée de la tige tubulaire et que, en outre, des moyens (11, 27, 28, 29, 495, 496) sont prévus pour éviter des bouchages du chemin d'écoulement.

2. Dispositif de forage selon la revendication 1, caractérisé en ce que le déflecteur (453) possède une surface de déviation de l'écoulement (455) de forme essentiellement conique et que l'orifice (40) dans la pièce d'entraînement (3) possède une étendue telle et est coordonné de telle manière au déflecteur (453) que la pointe (454) du cône est tournée vers la tige tubulaire (2) et située ensemble avec les centres des orifices dans un plan transversal et que les flancs (455) du déflecteur s'étendent jusqu'à la délimitation des orifices (40) éloignée de la tige tubulaire.

3. Dispositif de forage selon la revendication 1 ou 2, caractérisé en ce que l'orifice (40) possède une grandeur qui exploite autant que possible la distance entre les paliers (38, 39) sans compromettre la stabilité de la paroi.

4. Dispositif de forage selon une des revendications 1 - 3, caractérisé en ce que l'orifice possède une forme ovale.

5. Dispositif de forage selon une des revendications 1 - 4, caractérisé en ce que plusieurs orifices (40) sont prévus, dont les bords de délimitation orientés en direction axiale sont situés dans un plan transversal.

6. Dispositif de forage selon une des revendication 1 - 5, caractérisé en ce que le déflecteur (453) est formé par un raccord fileté pour tubes (45), qui peut être vissé dans la pièce d'entraînement (3) et qui porte sur son côté extérieur un filetage de raccordement pour l'assemblage avec des foreuses ou des machines analogues du commerce.

7. Dispositif de forage selon une des revendications 1 - 6, caractérisé en ce qu'une cheville (11) est disposée suivant une ligne diamétrale dans l'espace intérieur de la pièce d'entraînement (3) et est fixée dans les parois (35), cheville qui sert d'élément de tamisage pour retenir des fragments des déblais de forage aspirés qui pourraient boucher l'orifice ou les orifices (40).

8. Dispositif de forage selon la revendication 7, caractérisé en ce qu'un logement pour la réception d'un foret à centrer (49) est prévu dans la pièce d'entraînement (3) ou dans la partie entraînée de la tige tubulaire (2) et que le logement et/ou le foret à centrer (49) sont agencés de manière que lorsque le foret à centrer (49) est mis en place, un écoulement contenant des déblais de forage dégagés par le foret à centrer et de faible grosseur de grain puisse pénétrer à travers l'assemblage à emboîtement dans l'espace intérieur de la pièce d'entraînement, la disposition étant telle qu'un socle (491) ou un appendice (498) du foret à centrer (49) peut être emboîté par-dessus la cheville (11) ou être avancé à côté de celle-ci, en vue de l'obtention d'une liaison d'entraînement.

9. Dispositif de forage selon la revendication 8, caractérisé en ce que le foret à rentrer (493) et le socle (491) forment un ensemble, le socle (491) étant réalisé d'un tube cylindrique (491) qui porte à une extrémité un court foret à centrer (493), dont les parois présentent des orifices (495) pour le passage de l'éroulement et qui peut être emboîté par son autre extrémité (494) dans une partie tubulaire (35, 4), placée dans le chemin d'écoulement, de la tige tubulaire (2), de l'acrouplement ou de la pièce d'entraînement (3).

10. Dispositif de forage selon la revendication 9, caractérisé en ce que le logement et le' socle (491) sont mutuellement adaptés de manière que le foret à centrer (49) puisse facilement être emboîté suivant un trajet tel que le foret reçoit un maintien stable, et que des joints d'étanchéité (497, 499) sont prévus sur le socle (491) pour garder la zone de maintien à l'abri de poussière de forage.

11. Dispositif de forage sélon une des revendications 1 - 10, caractérisé en ce que des surfaces inclinées (27), des saillies (28) ou analogues sont prévues dans la zone du socle de la tige tubulaire (2), qui empêchent dans une large mesure l'obstruction du chemin d'éroulement par la carotte dégagée par le forage ou par des parties de cette carotte pendant le fonctionnement et/ou que des trous (29) sont prévus dans la paroi de la tige tubulaire (2), dans la zone du socle de la tige tubulaire (27, 28), trous qui, lorsque l'ouverture de passage (27, 28) est obstruée par la carotte ou ses parties, produisent ou maintiennent un écoulement latéral pour l'évacuation de poussière de forage.

12. Dispositif de forage selon une des revendications 1 - 11, caractérisé en ce que la pièce de raccordement (42) est reliée par l'intermédiaire d'une douille métallique moletée (421) à une ouverture (422) du corps (41), que la douille métallique (421) est fixée par une partie dans l'ouverture et fait saillie par une autre partie hors de cette ouverture (422) du corps (41), partie sur laquelle est fixée la pièce de raccordement, et que la paroi extérieure de la douille métallique (421) est reliée à l'ouverture (422) du corps et à la pièce de raccordement (42) par un ajustage serré.
